(19) Europäisches Patentamt
European Patent Office
Office européen des brevets

(11) Numéro de publication: **0 192 582**
**B1**

(12) **FASCICULE DE BREVET EUROPEEN**

(45) Date de publication du fascicule du brevet: **05.10.88**

(51) Int. Cl.⁴: **C 08 J 9/02,** C 08 L 83/04 // (C08L83/04, 83:05, 83:07)

(21) Numéro de dépôt: **86420018.3**

(22) Date de dépôt: **21.01.86**

(54) **Compositions organopolysiloxaniques transformables en mousses ayant une résistance améliorée à la combustion.**

(30) Priorité: **08.02.85 FR 8501764**

(43) Date de publication de la demande:
**27.08.86 Bulletin 86/35**

(45) Mention de la délivrance du brevet:
**05.10.88 Bulletin 88/40**

(84) Etats contractants désignés:
**AT BE CH DE FR GB IT LI LU NL SE**

(56) Documents cités:
**GB - A - 2 065 661**
**US - A - 3 814 723**
**US - A - 4 418 157**

(73) Titulaire: **RHONE-POULENC CHIMIE, 25, quai Paul Doumer, F-92408 Courbevoie Cédex (FR)**

(72) Inventeur: **Laisney, Bernard, 45, boulevard de Narcel, F-69110 Sainte-Foy-les-Lyon (FR)**
Inventeur: **Duvernay, Maurice, 59, Chemin de la Citadelle, F-69280 Saint-Genis-Laval (FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex (FR)**

**EP 0 192 582 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet des compositions organopolysiloxaniques transformables en mousses ayant une résistance améliorée à la combustion ainsi que leur procédé de préparation. Ces compositions sont formées par mélange de polymères organopolysiloxaniques portant des groupes réactifs, SiH, SiOH, et Si-Vinyle; elles sont catalysées par un dérivé du platine.

Des compositions organopolysiloxaniques transformables en mousses et catalysées par un dérivé du platine sont connues; elles figurent dans des brevets assez récents et plus particulièrement dans les brevet américains 3 923 705, 4 189 545, 4 418 157 et le brevet anglais 2 065 661.

Le brevet américain 3 923 705 a pour objet un procédé de préparation de mousses silicones consistant à mélanger un organohydrogénopolysiloxane ayant au moins 3 groupes SiH par mole, un organopolysiloxane hydroxylé ayant plus de 1 et jusqu'à 2,5 radicaux hydroxyles par mole et un catalyseur au platine à raison de 5 à 200 parties de platine pour 1 million de parties des compositions, l'organohydrogénopolysiloxane et l'organopolysiloxane hydroxylé étant présents en quantités suffisantes pour conduire à un rapport des groupes SiH aux groupes SiOH de 2,5 à 40. Un diorganopolysiloxane bloqué triorganosiloxy ayant une moyenne de 2 radicaux vinyle par mole peut être introduit dans les compositions.

Le brevet américain 4 189 545 se rapporte à une composition pour mousse silicone résistant à la combustion, comportant 100 parties d'un diorganopolysiloxane bloqué triorganosiloxy ayant de 0,0002 à 3% de radicaux vinyle, 0 à 200 parties d'une charge, 100 à 15 000 parties par million d'eau, 1 à 50 parties d'un diorganopolysiloxane portant des groupes SiH, de viscosité 5 à 100 mPa.s à 25 °C et 1 à 250 parties par million d'un catalyseur au platine.

Le brevet anglais 2 065 661 a pour objet une composition de silicone, transformable en mousse résistant à la combustion, comportant 100 parties d'un diorganopolysiloxane bloqué triorganosiloxy ayant de 0,0002 à 3% de radicaux vinyle, 1 à 10 parties d'un organopolysiloxane ayant 2 à 10% de radicaux hydroxyles, de viscosité 10 à 100 mPa.s à 25 °C, 0 à 200 parties d'une charge, 1 à 50 parties d'un diorganopolysiloxane portant des groupes SiH, de viscosité 5 à 100 mPa.s à 25 °C et 1 à 250 parties par million d'un catalyseur au platine. La composition peut contenir en outre 10 à 100 parties d'un copolymère à base de motifs triorganosiloxy et $SiO_2$, ou d'un autre copolymère à base de motifs triorganosiloxy, diorganosiloxy et $SiO_2$, le rapport des motifs triorganosiloxy aux motifs $SiO_2$ dans les 2 copolymères étant 0,5 à 1, les motifs diorganosiloxy représentant 1 à 10% de l'ensemble des motifs du deuxième copolymère; 2,5 à 10 des atomes de silicium des 2 copolymères portent des radicaux vinyles.

Le brevet américain 4 418 157 se rapporte à un procédé de préparation d'une mousse silicone de masse spécifique réduite, consistant à mélanger une composition, transformable en mousse (à base d'un diorganopolysiloxane, d'un organohydrogénopolysiloxane et d'un catalyseur au platine) avec une quantité efficace, pour réduire la masse volumique de la mousse, d'un copolymère constitué de motifs triorganosiloxy et $SiO_2$ ou d'un autre copolymère constitué de motifs triorganosiloxy, diorganosiloxy et $SiO_2$, le rapport des motifs triorganosiloxy aux motifs $SiO_2$ étant 0,25 à 0,8 et le rapport des motifs diorganosiloxy aux motifs $SiO_2$ étant 0 à 0,1.

Les compositions préparées selon les brevets précités conduisent à des mousses de bonne qualité, c'est-à-dire ayant la masse volumique recherchée et une assez bonne résistance à la combustion. Toutefois ces compositions sont parfois difficiles à préparer et à mettre en œuvre du fait qu'elles nécessitent un catalyseur au platine très actif et/ou un dosage minutieux de la répartition de leurs constituants.

Par ailleurs, les mousses obtenues n'ont pas toujours une résistance à la combustion suffisante. Un excellent comportement à la flamme est cependant nécesaire puisque les mousses silicones sont fréquemment utilisées pour la protection d'organes essentiels, tels que des câbles électriques, des relais électroniques, affectés par exemple à des appareillages traitant des produits dangereux ou à des dispositifs véhiculant des êtres humains. Le mauvais état de marche de ces organes lors d'un incendie pourrait empêcher le fonctionnement des systèmes d'alerte ou de sécurité.

La présente invention propose des compositions silicones d'une part transformables en mousses résistant remarquablement à la combustion et d'autre part faciles à préparer et à mettre en œuvre quelle que soit la masse spécifique recherchée des mousses. Ces avantages sont obtenus grâce à l'emploi conjoint en dehors des organopolysiloxanes à groupes SiH, Si-Vinyle et SiOH, de diorganopolysiloxanes bloqués triorganosiloxy ne possèdant pas de radicaux réactifs et de résines liquides organopolysiloxaniques possèdant des radicaux hydroxyles. Une résine liquide de ce type peut être préparée par réaction d'une huile diorganopolysiloxanique α–ω dihydroxylée, de viscosité déterminée avec une résine constituée de motifs triméthylsiloxy et $SiO_2$, possèdant au moins 0,6% de radicaux hydroxyles liés aux atomes de silicium; des résines similaires figurent dans le brevet américain 3 205 283.

Plus précisément la présente invention se rapporte à des compositions transformables en mousses résistant à la flamme, caractérisées en ce qu'elles comportent:

A) 100 parties d'une huile diorganopolysiloxanique, bloquée à chaque extrémité de sa chaîne par un motif vinyldiorganosiloxy, dont les radicaux organiques liés aux atomes de silicium sont choisis parmi les radicaux méthyle, éthyle, n-propyle, vinyle, phényle, trifluoro-3,3,3 propyle, de viscosité 100 à 250 000 mPa.s à 25 °C.

B) 50 à 100 parties d'une huile diorganopolysiloxanique bloquée à chaque extrémité de sa chaîne par un motif triorganosiloxy dont les radicaux organiques liés aux atomes de silicium, sont choisis parmi les radicaux méthyle, éthyle, phényle, trifluoro-3,3,3 propyle, de viscosité 10 à 5000 mPa.s à 25 °C.

C) 25 à 180 parties d'une huile diorganopolysiloxanique bloquée à chaque extrémité de sa chaîne par un radical hydroxyle, dont les radicaux organiques liés aux atomes de silicium sont choisis parmi les radicaux méthyle, éthyle, phényle, trifluoro-3,3, propyle, de viscosité 5 à 10 000 mPa.s à 25 °C.

D) 10 à 150 parties d'une résine liquide choisie dans le groupe constitué:

(i) d'une résine possèdant des motifs de formules $CH_3SiO_{1,5}$ et $(CH_3)_2SiO$, de rapport $CH_3/Si$ de 1,1 à 1,6, ayant une teneur pondérale de 1 à 6% en radicaux hydroxyles liés aux atomes de silicium, de viscosité 1500 à 20 000 mPa.s à 25 °C.

(2i) d'un produit de réaction préparé:

– à partir d'une solution, dans un solvant organique, d'une résine silicone possèdant des motifs de formule $(CH_3)_3\ Si_{0,5}$ et $SiO_2$ dont le rapport molaire $(CH_3)_3SiO_{0,5}/SiO_2$ est 0,4 à 1,2, ayant 0,6 à 5,5 moles-% de radicaux hydroxyles liés aux atomes de silicium et d'une huile diorganopolysiloxanique bloquée à chaque extrémité de sa chaîne par un radical hydroxyle lié à l'atome de silicium terminal, dont les radicaux organiques liés aux atomes de silicium sont choisis parmi les radicaux méthyle, éthyle, phényle, trifluoro-3,3,3 propyle, de viscosité 10 à 4000 mPa.s à 25 °C

– par chauffage du mélange des 2 réactifs, le rapport pondéral résine silicone/huile diorganopolysiloxanique étant 0,1 à 1,0 à une température supérieure à 80 °C pendant le temps nécessaire pour éliminer le solvant organique.

(3i) du mélange de la résine (i) avec le produit de réaction (2i), le rapport pondéral résine (i)/produit de réaction (2i) étant 0,2 à 5.

E) 10 à 40 parties d'un polymère liquide organohydrogénopolysiloxanique ayant au moins 3 SiH par mole

F) 30 à 90 parties d'une charge minérale et/ou métallique

G) 0,001 à 0,05 partie de platine-métal sous la forme d'un dérivé organique et/ou minéral du platine.

L'huile diorganopolysiloxanique A), de viscosité 100 à 250 000 mPa.s à 25 °C, de préférence 600 à 200 000 mPa.s à 25 °C, est un polymère linéaire, constitué d'une succession de motifs diorganosiloxy bloqué en bout de chaîne par un motif vinyldiorganosiloxy. Les radicaux organiques liés aux atomes de silicium du polymère sont choisis parmi les radicaux méthyle, éthyle, n-propyle, vinyle, phényle, trifluoro-3,3,3 propyle, au moins 60% de ces radicaux sont des radicaux méthyle, au plus 20% sont des radicaux phényle et au plus 2% sont des radicaux vinyle (ne sont pas compris dans ce pourcentage les radicaux vinyle situés en bout de chaîne).

A titre d'exemples concrets de motifs diorganosiloxy, peuvent être cités ceux de formules:

$(CH_3)_2SiO$, $CH_3(CH_2{=}CH)SiO$, $CH_3(C_6H_5)SiO$, $(C_6H_5)_2SiO$, $CH_3(n.C_3H_7)SiO$, $CH_3(C_6H_5)SiO$, $CF_3CH_2CH_2(CH_3)SiO$.

De préférence est utilisée une huile diméthylpolysiloxanique bloquée à chaque extrémité de sa chaîne par un motif diméthylvinylsiloxy ou un motif méthylphénylvinylsiloxy, de viscosité 600 à 150 000 mPa.s à 25 °C.

L'huile est commercialisée par les fabricants de silicones, par ailleurs, sa fabrication peut être réalisée par exemple, en polycondensant et réarrangeant, en présence d'un catalyseur, le produit d'hydrolyse d'un mélange constitué d'un diorganovinylchlorosilane et d'un diorganodichlorosilane. Elle peut être réalisée encore par polymérisation d'un diorganocyclopolysiloxane, tel que l'octaméthylcyclotétrasiloxane, à l'aide d'un catalyseur alcalin ou acide, en présence d'une quantité appropriée d'un bloqueur de chaîne tel que celui de formule:

$$RCH_2{=}CH)CH_3SiO[Si(CH_3)_2O]_nSiCH_3(CH{=}CH_2)R$$

R étant un radical méthyle ou phényle et n étant un nombre quelconque de 0 à 20.

Après atteinte de l'équilibre de la réaction de polymérisation, on neutralise le catalyseur et élimine par distillation les composés volatils. On peut utiliser l'huile A) seule ou sous la forme d'un mélange d'huiles A) qui se différencient les unes des autres par la valeur de leur viscosité. On peut également, dans la mesure où les compositions moussantes sont conditionnées en 2 composants, introduire une huile de viscosité relativement faible par exemple 1000 à 20 000 mPa.s à 25 °C dans l'un des 2 composants et une autre de viscosité plus élevée par exemple de 60 000 à 150 000 mPa.s à 25 °C dans l'autre composant. Ce processus permet de règler la viscosité des 2 composants.

L'huile diorganopolysiloxanique B) est utilisée à raison de 50 à 100 parties, de préférence 55 à 95 parties pour 100 parties de l'huile vinylée A); c'est un polymère linéaire bloqué en bout de chaîne par un motif triorganosiloxy, de viscosité 10 à 5000 mPa.s à 25 °C, de préférence 15 à 3500 mPa.s à 25 °C. Les radicaux organiques liés aux atomes de silicium du polymère sont choisis parmi les radicaux méthyle, éthyle, phényle, trifluoro-3,3,3 propyle; au moins 70% de ces radicaux sont des radicaux méthyle, au plus 15% sont des radicaux phényle.

A titre d'exemples concrets de motifs diorganosiloxy formant l'enchaînement linéaire de l'huile B) peuvent être cités ceux de formules $(CH_3)_2SiO$, $CH_3(C_6H_5)SiO$, $(C_6H_5)_2SiO$, $CH_3(C_6H_5)SiO$, $CF_3CH_2CH_2(CH_3)SiO$.

A titre d'exemples concrets de motifs bloquant les chaînes peuvent être cités ceux de formules $(CH_3)_3SiO_{0,5}$, $(CH_3)_2C_6H_5SiO_{0,5}$, $(CH_3)_2(C_2H_5)SiO_{0,5}$, $CF_3CH_2CH_2(CH_3)_2SiO_{0,5}$.

De préférence, on utilise une huile diméthylpolysiloxanique bloquée à chaque extrémité de sa chaîne par un motif triméthylsiloxy ou diméthylphénylsiloxy de viscosité 15 à 3000 mPa.s à 25 °C.

L'huile B) est commercialisée par les fabricants de silicones; de plus, elle peut être préparée en suivant les modes opératoires décrits ci-avant pour la préparation de l'huile A), toutefois les organochlorosilanes mis en œuvre dans la réaction de polycondensation ainsi que les diorganocyclopolysiloxanes et les polymères bloqueurs de chaîne, mis en œuvre dans la réaction de polymérisation, portent des radicaux organiques liés aux atomes de silicium choisis uniquement parmi les radicaux méthyle, éthyle, phényle et trifluoro-3,3,3 propyle. On peut utiliser une huile B) telle quelle ou sous la forme d'un mélange d'huiles B qui se différencient les unes des autres par la valeur de leur viscosité.

Dans la mesure où les compositions moussantes de l'invention sont conditionnées en 2 composants, cela donne la possibilité de répartir l'huile B entre les 2 composants et par suite d'introduire, si on le désire, dans l'un des composants une huile B) peu visqueuse, par exemple de 15 à 100 mPa.s à 25 °C et dans l'autre composant une huile plus visqueuse par exemple de 100 à 2500 mPa.s à 25 °C.

L'huile diorganopolysiloxanique α–ω dihydroxylée C) est utilisée à raison de 25 à 180 parties, de préférence 30 à 150 parties, pour 100 parties de l'huile vinylée A).

C'est un polymère linéaire de viscosité 5 à 10 000 mPa.s à 25 °C, de préférence 10 à 8000 mPa.s à 25 °C, bloqué à chaque extrémité de sa chaîne par un radical hydroxyle; les radicaux organiques liés aux atomes de silicium sont choisis parmi les radicaux méthyle, éthyle, phényle, trifluoro-3,3,3 propyle, au moins 80% de ces radicaux sont des radicaux méthyle et au plus 10% sont des radicaux phényle.

A titre d'exemples concrets de motifs diorganosiloxy formant le squelette linéaire de l'huile, peuvent être cités ceux de formules: $(CH_3)_2SiO$, $CH_3(C_2H_5)SiO$, $CH_3(C_6H_5)SiO$, $(C_6H_5)_2SiO$, $CH_3(CF_3CH_2CH_2)SiO$.

De préférence, est utilisée une huile diméthylpolysiloxanique, bloquée à chaque extrémité de sa chaîne par un radical hydroxyle lié à l'atome de silicium terminal, de viscosité 10 à 5000 mPa.s à 25 °C. L'huile C) peut être utilisée telle quelle ou sous la forme d'un mélange avec une, ou plusieurs autres huiles C, qui se différencient entre elles par la valeur de leur viscosité.

Selon une modalité de l'invention, il est même recommandé d'utiliser un mélange renfermant par exemple de 23 à 140 parties d'une huile C) de viscosité 300 à 8000 mPa.s à 25 °C et 2 à 40 parties d'une autre huile C) de viscosité 5 à 150 mPa.s à 25 °C, pour 100 parties de l'huile vinylée A). La présence de l'huile C) de faible viscosité peut favoriser, au sein de compositions moussantes déterminées, la formation de mousses ayant conjointement une faible masse volumique par exemple inférieure à 300 kg/m$^3$ et une structure cellulaire fine et régulière.

L'huile C) est disponible sur le marché des silicones; de plus elle peut être fabriquée en suivant la technique de polymérisation des diorganocyclopolysiloxanes décrite pour la préparation de l'huile A). Cependant, le bloquer de chaîne utilisé dans cette dernière préparation est remplacé ici par de l'eau et/ou un diorganopolysiloxane α–ω dihydroxylé de faible masse moléculaire, par exemple ayant de 2 à 30 atomes de silicium dans sa chaîne.

La résine liquide D) est utilisée à raison de 10 à 150 parties, de préférence 15 à 135 parties, pour 100 parties de l'huile vinylée A).

Elle peut être choisie dans le groupe des résines renfermant la résine (i) constituée des motifs de formules $CH_3SiO_{1,5}$ et $(CH_3)SiO$, de rapport $CH_3/Si$ 1,05 à 1,65, de préférence 1,10 à 1,6, ayant conjointement une teneur pondérale de 0,9 à 6%, de préférence 1 à 5,50%, en radicaux hydroxyles liés aux atomes de silicium et une viscosité de 1500 à 20 000 mPa.s à 25 °C, de préférence 2000 à 18 000 mPa.s à 25 °C.

La résine liquide (i) peut être préparée par cohydrolyse (de préférence en milieu solvant organique tel que l'éther éthylique, le toluène) d'un mélange de méthyltrichlorosilane et de diméthyldichlorosilane présentant le rapport $CH_3/Si$ désiré c'est-à-dire 1,05 à 1,65; un tel mode opératoire figure en particulier dans le brevet américain 2 985 544.

Il est recommandé d'utiliser parmi les résines (i) celles ayant au moins 2,9 et pouvant dépasser 10 radicaux hydroxyles par mole. Les résines présentant cette caractéristique possèdent par exemple, une masse moléculaire moyenne en nombre Mn, de 2000 à 5000 pour une teneur pondérale en radicaux hydroxyles de 2,5 à 4%.

La résine liquide D) peut être également choisie dans le groupe des résines renfermant le produit de réaction (2i) formé par chauffage d'un mélange d'une solution, dans un solvant organique, d'une résine MQ avec une huile diorganopolysiloxanique bloquée à chaque extrémité de sa chaîne par un radical hydroxyle lié à l'atome de silicium terminal. La résine MQ possède des motifs $(CH_3)_3SiO_{0,5}$ et $SiO_2$ répartis selon le rapport molaire $(CH_3)_3SiO_{0,5}/SiO_2$ 0,4 à 1,2, de préférence 0,5 à 1,1 et ayant une teneur pondérale de 0,6 à 5,5%, de préférence de 0,8 à 5% en radicaux hydroxyles liés aux atomes de silicium.

Elle est conservée en solution dans un solvant organique usuel tel que le toluène, le xylène, le cumène, le chlorobenzène, le cyclohexane, le méthylcyclohexane, le tétrachloroéthane, le trichlorotrifluoroéthane. Sa concentration dans la solution peut varier de 20 à 70% en poids. La résine MQ est un copolymère organopolysiloxanique bien connu dont la préparation peut être effectuée à partir de triméthylchlorosilane et/ou d'hexaméthyldisiloxane et de silicate de sodium; les brevets américain 2 676 182 et 2 857 356 donnent des détails sur cette préparation.

Il est recommandé d'utiliser parmi les résines MQ celles ayant au moins 2,8 et pouvant dépasser 20 radicaux hydroxyles par mole.

Les résines présentant cette caractéristique possèdent, par exemple une masse moléculaire moyenne en nombre Mn de 2400 à 7000 pour une teneur pondérale en radicaux hydroxyles de 2 à 5%.

L'huile diorganopolysiloxanique α–ω dihydroxylée, devant réagir avec la résine MQ, est un polymère linéaire de la famille de l'huile C); elle porte donc des radicaux méthyle, éthyle, phényle, trifluoropropyle; au moins 80% de ces radicaux sont méthyle et au plus 10% sont phényle. Cette huile a une viscosité de 10 à 4000 mPa.s à 25 °C, de préférence 15 à 3500 mPa.s à 25 °C. Cette plage de valeurs est plus limitée que celle attribuée à l'huile C) qui est de 5 à 10 000 mPa.s à 25 °C.

La description établie antérieurement concernant la préparation et la constitution de l'huile hydroxylée C) s'applique entièrement à la présente huile hydroxylée de viscosité 10 à 4000 mPa.s à 25 °C. De préférence, on utilise comme huile hydroxylée une huile diméthylpolysiloxanique α–ω dihydroxylée de viscosité 15 à 2500 mPa.s à 25 °C.

Le mélange constitué de la solution de la résine MQ et de l'huile hydroxylée de viscosité 10 à 4000 mPa.s à 25 °C est effectué par simple agitation; les quantité utilisées des 2 réactifs sont telles que le rapport pondéral résine MQ/huile α–ω dihydroxylée est 0,1 à 1, de préférence 0,15 à 0,95. Le mélange homogène obtenu est chauffé de préférence au-dessus de 80 °C à la pression atmosphérique; il est ensuite soumis à une pression inférieure à la pression atmosphérique pendant un temps suffisant pour éliminer pratiquement tout le solvant organique de la résine MQ. Le mélange peut également être chauffé progressivement au-dessus de 80 °C tout en étant soumis dès le début du chauffage à une pression inférieure à la pression atmosphérique. Selon une modalité du procédé, il est possible de ne pas mélanger préalablement la solution de la résine MQ avec l'huile hydroxylée mis de distiller sous une pression de préférence inférieure à la pression atmosphérique, le solvant organique de la solution de résine et d'introduire, au fur et à mesure de l'élimination de ce solvant, l'huile diorganopolysiloxanique α–ω dihydroxylée.

Quel que soit le processus opératoire utilisé, il est recommandé de ne pas dépasser 250 °C dans la masse du mélange.

Le mélange liquide obtenue à la fin de la réaction constitue la résine liquide (2i); il présente une viscosité de 500 à 25 000 mPa.s à 25 °C, de préférence 800 à 20 000 et une teneur pondérale en radicaux hydroxyles liés aux atomes de silicium, de 0,2 à 4,5%, de préférence, 0,3 à 4,2%.

La nature de la résine liquide (2i) (c'est-à-dire le produit de réaction entre la résine MQ et l'huile diorganopolysiloxanique α–ω dihydroxylée) n'est pas bien déterminée. Cette résine liquide possède cependant des propriétés spéciales puisqu'elle peut être transformée en un matériau élastique transparent comme l'enseigne le brevet américain 3 205 283.

De plus, on constate et le brevet américain 3 205 283 le signale également, que le mélange d'une solution dans un solvant organique de la résine MQ avec une huile diorganopolysiloxanique α–ω dihydroxylée de viscosité supérieure à 4000 mPa.s à 25 °C, aboutit après départ de la majorité du solvant organique par chauffage, à un produit pseudo-gélifié. Ce produit est difficilement incorporable avec les autres constituants des compositions de l'invention.

La résine liquide D) peut être en outre choisie dans le groupe des résines renfermant le mélange constitué de la résine (i) et du produit de réaction (2i), le rapport pondéral résine (i)/produit de réaction (2i) ayant la valeur 0,2 à 5, de préférence 0,3 à 4,5. Le mélange, préparé par simple incorporation de l'un des 2 constituants dans l'autre, est homogène et stable, ce qui est inattendu étant donné que les résines silicones de structures différentes sont peu compatibles entre elles.

De préférence, on utilise, pour fabriquer ce mélange un produit de réaction (2i) dont l'huile hydroxylée, de départ est choisie parmi les huiles diméthylpolysiloxaniques α–ω dihydroxylées de viscosité 15 à 2500 mPa.s à 25 °C.

Le polymère liquide organohydrogénopolysiloxanique E) ayant au moins 3 groupes SiH par mole est utilisé à raison de 10 à 40 parties, de préférence 12 à 38 parties, pour 100 parties de l'huile vinylée A). Ce polymère répond à la formule moyenne $G_xH_ySiO_{\frac{4-x-y}{2}}$ dans laquelle x est un nombre de 1 à 1,99, de préférence 1,05 à 1,95 et y est un nombre de 0,1 à 1, de préférence de 0,2 à 0,95, la somme x + y représente un nombre de 1,7 à 2,6, de préférence 1,75 à 2,55 et G représente un radical méthyle, éthyle, n-propyle, phényle, au moins 80% des radicaux G sont des radicaux méthyles.

La formule ci-avant englobe les polymères E) présentant une structure linéaire, cyclique, ou ramifiée.

Un polymère E) de structure linéaire peut répondre à la formule moyenne:

$$G_{(3-t)}H_tSi[OSiG_2]_g[OSi(G)H]_hOSiH_tG_{(3-t)}$$

dans laquelle t est le nombre zéro ou un, g est un nombre de 0 à 50, h est un nombre de 3 à 90 et G a la même signification que celle donnée ci-dessus lors de la description de la formule générale.

De préférence, on utilise un polymère de structure linéaire répondant à la formule moyenne:

$$(CH_3)_3Si[OSi(CH_3)_2]_g[OSi(CH_3)H]_hOSi(CH_3)_3$$

dans laquelle g et h ont la signification ci-avant.

Un polymère E) de structure cyclique peut répondre à la formule moyenne:

$$[OSi(G)H]_{n1}[OSiG_2]_{n2}$$

dans laquelle $n^1$ est un nombre de 3 à 10 et $n^2$ est un nombre de zéro à 5 et G a la même signification que celle donnée précédemment.

De préférence, on choisit un polymère de structure cyclique répondant à la formule $[OSi(CH_3)_H]_4$ ou à la formule $[OSi(CH_3)H]_3$.

Un polymère E) de structure ramifiée renferme au moins un motif de formules $GSiO_{1,5}$, $SiO_2$, $HSiO_{1,5}$, les autres motifs étant choisis dans le groupe de ceux de formules $G_3SiO_{0,5}$, $HG_2SiO_{0,5}$, $G_2SiO$, H(G)SiO; G ayant toujours la même signification que celle donnée précédemment.

Un polymère ayant une structure ramifiée bien déterminée peut répondre à la formule moyenne:

$$Q_wSi[(OSiG_2H)]_{w'}(OSiG_3)_{w''}]_{4-w}$$

dans laquelle Q représente G ou H (G ayant toujours la même signification); w est le nombre zéro ou un; w' est le nombre 2, 3 ou 4; w" est le nombre zéro ou un et w' + w" représente le nombre 3 ou 4; toutefois lorsque w est zéro, w' est le nombre 3 ou 4; lorsque w est 1 et Q représente H, w' est le nombre 2 ou 3; lorsque w est 1 et Q représente G, w' est le nombre 3.

De préférence, on choisit un polymère de structure ramifiée répondant à la formule $CH_3Si[O\text{-}Si(CH_3)_2H]_3$ ou à la formule $Si[OSi(CH_3)_2H]_4$.

La charge minérale et/ou métallique F) est utilisée à raison de 30 à 90 parties, de préférence 35 à 85 parties, pour 100 parties de l'huile vinylée A). Elle peut être choisi dans le groupe:

– des charges renforçantes telles que la silice de combustion, de précipitation

– des charges semi-renforçantes ou non renforçantes telles que le quartz broyé, la silice de diatomées, le talc, le mica, le carbonate de calcium, l'argile calcinée, les oxydes de magnésium, de titane, de fer, de zinc, d'aluminium, de plomb, de cuivre, les oxydes et hydroxydes de terres rares (tels que l'oxyde cérique, l'hydroxyde cérique) le silicate de hinc, le sulfate de baryum, le métaphosphate de baryum ou de zinc, le borate du plomb, le carbonate de plomb, le borate de zinc, le borate de calcium, le borate de baryum, le silicate d'aluminium

– des poudres métalliques telles que celles à base de cuivre, de fer, de plomb, d'aluminium, de zinc.

D'autres charges peuvent être utilisées comme le noir de carbone à raison de 0,02 à 1 partie, de préférence 0,15 à 0,9 partie, pour 100 parties de l'huile vinylée A). La présence d'un noir de carbone, exempt de soufre ou de dérivés soufrés, dans certaines formulations permet d'améliorer assez nettement la résistance à la combustion des mousses. Il est possible dans certains cas de renforcer encore la résistance à la combustion en associant le noir de carbone avec de l'hydroxyde cérique, cet hydroxyde étant alors introduit à raison de 0,005 à 4 parties, de préférence 0,01 à 3,5 parties, pour 100 parties de l'huile vinylée A).

Le catalyseur au platine G) est introduit de manière à fournir de 0,001 à 0,05 partie, de préférence de 0,0015 à 0,04 partie de platine, exprimé en métal, pour 100 parties de l'huile vinylée A).

Ce catalyseur peut être déposé sur des supports inertes tels que le gel de silice, l'alumine, le noir de carbone. De préférence, on utilise un catalyseur non supporté choisi parmi l'acide chloroplatinique, sa forme hexahydratée, ses sels alcalins, ses complexes avec les dérivés organiques.

En particulier, sont recommandés les produits de réaction de l'acide chloroplatinique avec des vinylpolysiloxanes, tels que le divinyl-1,3 tétraméthyldisiloxane, traités ou non avec un agent alcalin pour éliminer partiellement ou totalement les atomes de chlore (brevets américains 3 419 593, 3 775 452 et 3 814 730). Sont recommandés également les produits de réaction de l'acide chloroplatinique avec des alcools, éthers, aldéhydes (brevet américain 3 220 972).

D'autres catalyseurs efficaces comprennent les chélates de platine et les complexes du chlorure platineux avec des phosphines, des oxydes de phosphines, des oléfines comme l'éthylène, le propylène, le styrène (brevets américains 3 159 601, 3 552 327).

La fabrication des compositions moussantes conformes à l'invention peut avoir lieu par simple mélange des divers constituants A), B), C), D), E), F) et G) dans un ordre quelconque d'introduction, à l'aide d'appareillages appropriés. Il est toutefois souhaitable d'ajouter en dernier, le catalyseur au platine G) ou le polymère hydrogénoorganopolysiloxanique E). Les compositions ainsi formées se transforment immédiatement en mousses dès la température ambiante. Cependant, pour obtenir des mousses de bonnes qualités, il est nécessaire non seulement d'introduire les divers constituants A, B, C, E, E, F et G selon les quantités antérieurement définies, mais en outre de choisir convenablement d'une part la teneur pondérale en radicaux hydroxyles apportés par l'huile C) et par la résine liquide D) et d'autre part les taux de radicaux SiH apportés par le polymère hydrogénoorganopolysiloxanique E), de manière à aboutir à un rapport molaire des radicaux SiH aux radicaux hydroxyles de 1,2 à 25, de préférence de 1,5 à 20.

Dans ces conditions, on fabrique des mousses possédant des cellules fines et régulières et une masse volumique de 180 à 350 $kg/m^3$, de préférence 200 à 290 $kg/m^3$.

On s'est aperçu par ailleurs que l'utilisation dans les compositions de l'invention de résine i) ou du produit de réaction 2i ou de leur mélange 3i n'abaissait pas la densité de la mousse par rapport à l'utilisation d'un mélange d'huiles hydroxylées seules, ou de résines HQ hydroxylées seules.

Ces mousses résistent assez bien à la flamme; néanmoins pour avoir une résistance encore plus efficace, principalement dans des conditions d'utilisation comme éléments coupe-feu, il est recommandé de choisir parmi les huiles hydroxylées C) et les résines liquides hydroxylées D), les quantités appropriées, la masse moléculaire appropriée et le taux pondéral de radicaux hydroxylés appropriée, de façon à obtenir dans le mélange rassemblant ces huiles C) et ces résines D) plus de

2,5, de préférence plus de 2,9 radicaux hydroxyles par mole.

Ainsi, à titre d'exemple, en considérant que l'on utilise:

– 100 g d'une résine D) (telle que la résine liquide (I) de masse moléculaire moyenne en nombre 4000, de taux de radicaux hydroxyles 3%, donc ayant 7 radicaux OH par mole

– 100 g d'une huile hydroxylée C) de masse moléculaire moyenne en nombre 10 000, ayant 2 radicausx OH par mole

– 50 g d'une huile hydroxylée C), de masse moléculaire moyenne en nombre 500, ayant 2 radicaux OH par mole

– on aboutit à un mélange rassemblant les 3 polymères, qui comporte une valeur moyenne de 2,9 radicaux OH par mole.

On peut utiliser comme résine D), non plus la résine liquide (i) mais le produit de réaction (2i), formé, comme déjà indiqué, à partir d'une résine MQ et d'une huile hydroxylée 10 à 4000 mPa.s à 25 °C; dans ce cas on se base, pour établir le nombre d'OH/mole de cette résine (2i) dont la structure est mal connue, sur les caractéristiques des produits de départ, c'est-à-dire sur la quantité utilisée, la masse moléculaire moyenne en nombre, le taux de radicaux OH, de la résine MQ et sur la quantité utilisée, la masse moléculaire moyenne en nombre de l'huile hydroxylée.

Ainsi, les compositions de l'invention renfermant les constituants C) et D), dont le mélange possède un moyenne de plus de 2,5, de préférence de plus de 2,9, radicaux hydroxyles par mole, conduisent à des mousses résistant très efficacement à la combustion.

En particulier, ces mousses après avoir été exposées pendant au moins 3 heures à une flamme dont la température est d'au moins 1000 °C ne sont que partiellement détruites, il reste généralement 20 à 40% de leur masse pratiquement intacte.

Les compositions de l'invention peuvent être préparées comme indiqué précédemment, par simple mélange des divers constituants, cependant ces compositions se transforment immédiatement en mousse. Pour les stabiliser et les conditionner sous forme de compositions monocomposantes, il est nécessaire d'ajouter un inhibiteur au catalyseur au platine G). De tels inhibiteurs sont bien connus; en particulier on peut citer les amines, les silazanes, les oximes, les diesters de diacides carboxyliques, les alcools acétyléniques, les cétones acétyléniques, les vinylméthylcyclopolysiloxanes (brevets américains 3 445 420, 3 989 667).

L'inhibiteur est utilisé à raison de 0,005 à 5 parties de préférence 0,01 à 3 parties pour 100 parties de l'huile vinylée A).

Les compositions renfermant un inhibiteur peuvent être stables pendant plusieurs jours à la température ambiante; pour obtenir les mousses au moment désiré, on est obligé de chauffer les compositions au-dessus de 60 °C, de préférence au-dessus de 100 °C, cependant ce mode opératoire est contraignant aussi dans la majorité des cas on conditionne les compositions conformes à l'invention en 2 composants; l'inhibiteur est absent ou bien il est ajouté à faible dose dans le dessin de règler le temps de formation des mousses.

L'un des composants pourra être constitué par exemple d'une fraction des huiles vinylées A), d'une fraction des huiles bloquées B), de la totalité des huiles hydroxylées C), de la totalité des résines liquides D), d'une fraction des charges F), de la totalité du catalyseur G).

L'autre composant pourra être constitué de la fraction restante des huiles vinylées A), de la fraction restante des huiles bloquées B), de la fraction restante des charges F), de la totalité du polymère hydrogénoorganopolysiloxanique E).

On s'arrange en jouant sur les quantités mises en jeu des divers constituants et sur la viscosité des polymères pour préparer 2 composants dont les viscosités ne sont pas très élevées par exemple au plus 20 000 mPa.s à 25 °C.

Il est possible d'arriver en fonction des quantités utilisées et du nombre et de la nature des constituants, entrant dans chacun des 2 composants, à un grand nombre de solutions pour le conditionnemenmt en 2 composants. Il est recommandé cependant de mettre dans l'un des composants, la totalité du catalyseur au platine G), et dans l'autre la totalité du polymère hydrogénoorganopolysiloxanique E).

Les mousses issues des compositions conformes à l'invention sont utilisables dans tous les domaines d'application nécessitant une protection efficace contre le feu.

Dans les centrales nucléaires on ménage des trous dans les murs ou les plafonds pour le passage des câbles électriques; après la pose des câbles, il reste un volume vide, à l'endroit des zones de passage, qu'il est nécessaire de combler; les compositions de l'invention conviennent remarquablement pour cet usage.

Elles conviennent également pour le remplissage à l'intérieur des bâtiments, des espaces vides situés par exemple dans les montées de câbles, de canalisations, dans les faux-plafonds.

Elles conviennent pour le bouchage des trous et fissures apparaissant dans les constructions en béton et en maçonnerie, dans les pistes dallées.

Elles conviennent enfin dans les domaines d'application utilisant des matériaux souples, légers, résistant à la flamme et au vieillissement, tels que la protection des composants électroniques, la fabrication de tampons, de coussins.

Les exemples suivants illustrent l'invention:

Exemples 1 à 6

On utilise pour fabriquer des mousses deux compositions $A_1$ et $B_1$, que l'on mélange dans le rapport pondéral 1/1, au moment de l'emploi. Ces deux compositions sont formées, à partir des constituants choisis dans le groupe de ceux décrits ci-après:

– une huile diméthylpolysiloxanique bloquée à chaque extrémité de sa chaîne par un motif vinyldiméthylsiloxy ayant:

· une viscosité de 100 000 mPa.s à 25 °C, elle sera appelée huile diméthyle vinylée V 100 000

· une viscosité de 3500 mPa.s à 25 °C, elle sera appelée huile diméthyle vinylée V 3500

– une huile diméthylpolysiloxanique bloquée à chaque extrémité de sa chaîne par un motif triméthylsiloxy ayant:

· une viscosité de 1000 mPa.s à 25 °C, elle sera appelée huile diméthyle V 1000

· une viscosité de 100 mPa.s à 25 °C, elle sera appelée huile diméthyle V 100

· une viscosité de 50 mPa.s à 25 °C, elle sera appelée huile diméthyle V 50

· une viscosité de 20 mPa.s à 25 °C, elle sera appelée huile diméthyle V 20

– une huile diméthylpolysiloxanique bloquée à chaque extrémité de sa chaîne par un radical hydroxyle lié à l'atome de silicium terminal, ayant:

· une viscosité de 3500 mPa.s à 25 °C, une $\overline{Mn}$ d'environ 17 500 et un taux d'OH de 0,2%, elle sera appelée huile diméthyle hydroxylée V 3500

· une viscosité de 750 mPa.s à 25 °C, une $\overline{Mn}$ d'environ 9500 et un taux d'OH de 0,35%, elle sera appelée huile diméthyle hydroxylée V 750

· une viscosité de 60 mPa.s à 25 °C, une $\overline{Mn}$ d'environ 850 et un taux d'OH de 4%, elle sera appelée huile diméthyle hydroxylée V 60

· une viscosité de 35 mPa.s à 25 °C, une $\overline{Mn}$ d'environ 450, un taux d'OH de 9%, elle sera appelée huile diméthyle hydroxylée V 35

– une solution à 60% d'une résine MQ dans le toluène; cette résine est constituée de motifs $(CH_3)_3SiO_{0,5}$ et $SiO_2$ répartis selon un rapport molaire $(CH_3)_3SiO_{0,5}/SiO_2$ de 0,6; elle renferme 3,4% de radicaux OH, sa $\overline{Mn}$ est de l'ordre de 5000 (elle possède ainsi 10 radicaux OH par mole). Elle sera appelée résine MQ à 3,4% d'OH

· – une solution à 60% d'une résine MQ dans le toluène; cette résine est constituée de motifs $(CH_3)_3SiO_{0,5}$ et $SiO_2$ répartis selon un rapport molaire $(CH_3)_3SiO_{0,5}/SiO_2$ de 0,75; elle renferme 1,3% de radicaux OH, sa $\overline{Mn}$ est de l'ordre de 6000 (elle possède ainsi 4,5 radicaux OH par mole). Elle sera appelée résine MQ à 1,3% d'OH

– une résine liquide préparée selon le processus ci-après:

On introduit dans un appareil à distiller 72 parties de la solution à 60% dans le toluène de la résine MQ à 3,4% d'OH et 57 parties de l'huile diméthyle V 20 et chauffe l'ensemble à 130 °C à la pression atmosphérique; on met ensuite l'appareil sous une pression de 25 mbars, on élimine ainsi le toluène et des traces d'eau. La résine liquide obtenue, pratiquement exempte de toluène, à une viscosité de 750 mPa.s à 25 °C; elle renferme 43% de la résine MQ, elle sera appelée résine liquide formée à partir de résine MQ à 3,4% d'OH et d'huile diméthyle V 20

– une résine liquide préparée selon le processus ci-après:

On introduit dans un appareil à distiller 68 parties de la solution à 60% dans le toluène de la résine MQ à 3,4% d'OH et 60 parties de l'huile diméthyle vinylée V 3500. On chauffe l'ensemble vers 140 °C à la pression atmosphérique et met ensuite l'appareil sous une pression de 35 mbars; on élimine ainsi le toluène et des traces d'eau. Il reste une résine liquide de viscosité... mPa.s à 25 °C; renfermant 40% de la résine MQ; elle sera appelée résine liquide formée à partir de résines MQ à 3,4% d'OH et d'huile diméthyle vinylée V 3500

– une résine liquide préparée selon le processus ci-après:

On introduit dans un appareil à distiller 68 parties de la solution à 60% dans le toluène de la résine MQ à 3,4% d'OH et 60 parties de l'huile diméthyle hydroxylée V 750. On chauffe l'ensemble 140 °C à la pression atmosphérique et met ensuite l'appareil sous une pression de 30 mbars. On élimine ainsi le toluène et de l'eau. Il reste une résine liquide de viscosité 15 000 mPa.s à 25 °C renfermant 40% de la résine MQ. Elle sera appelée résine liquide formée à partir de résine MQ à 3,4% d'OH et d'huile diméthyle hydroxylée V 750

– une résine liquide préparée selon le processus ci-après:

On introduit dans un appareil à distiller 68 parties de la solution à 60% dans le toluène de la résine MQ à 1,3% de radicaux OH et 60 parties de l'huile diméthyle hydroxylée V 750. On chauffe l'ensemble à 130 °C à la pression réduite se stabilisant vers 35 mbars. De l'eau et le toluène sont éliminés. Il reste une résine liquide de viscosité 16 000 mPa.s à 25 °C renfermant 40% de résine MQ. Elle sera appelée résine liquide formée à partir de résine MQ à 1,3% d'OH et d'huile diméthyle hydroxylée V 750

– une résine liquide constituée de motifs $CH_3SiO_{1,5}$ et $(CH_3)_2SiO$, présentant un rapport $CH_3/Si$ de 1,3 ayant 2,5% de radicaux OH, de viscosité 5500 mPa.s à 25 °C, de $\overline{Mn}$ 3500 (elle possède ainsi 5,1 radicaux OH par mole). Elle sera appelée résine liquide à 2,5% d'OH et de $CH_3/Si$ 1,3

– un polymère linéaire méthylhydrogénopolysiloxanique de viscosité 25 mPa.s à 25 °C, constitué d'environ 50 motifs méthylhydrogénosiloxy, bloqué à chaque extrémité de sa chaîne par un motif triméthylsiloxy. Il sera appelé polymère méthylhydrogénopolysiloxanique

– du quartz broyé de diamère particulaire moyen 5 µm. Il sera appelé quartz broyé

– un empâtage d'un noir de carbone; il est constitué de 15% d'un noir de carbone exempt de soufre et 88% de l'huile diméthyle V 20. Il sera appelé empâtage au noir de carbone

– une solution catalytique renfermant 0,25% de platine métal; cette solution est préparé par agitation, à la température ambiante, d'un mélange comprenant 0,6 partie d'acide, chloroplatinique, 10 parties d'isopropanol, 55 parties de xylène, 6 parties du tétraméthyl-1,1,3,3 divinyl-1,3 disiloxane. Elle sera appelée solution catalytique à 0,25% de platine

– un mélange de méthylvinylcyclopolysiloxanes renfermant 90% du tétraméthyl-1,3,5,7 tétravinyl-1,3,5,7 cyclotétrasiloxane. Il sera appelé méthylvinylcyclopolysiloxane.

En ce qui concerne la préparation des mousses et leurs caractéristiques physiques on note:

– la viscosité de chacune des parties $A_1$ et $B_1$

– le temps de prise, c'est-à-dire le temps de formation des mousses calculé à partir de l'instant où les 2 parties $A_1$ et $B_1$ sont mélangées

– la masse volumique des mousses

– le nombre moyen de radicaux hydroxyles par mole (dénommé OH/mole) calculé dans le mélange englobant la totalité des polymères organopolysiloxaniques hydroxylés utilisés dans chaque formule de mousse.

Ces polymères organopolysiloxaniques hydroxylés sont choisis dans le groupe des huiles diméthyles hydroxylées de V 3500, V 750, V 60, V 35, des résines MQ à 3,4 et 1,3 d'OH et de la résine liquide à 2,5% d'OH et de $CH_3/Si$ 1,3.

On considère pour le calcul de la valeur du rapport OH/mole que les résines MQ à 3,4 et 1,3% d'OH après réaction avec l'huile diméthyle V 20, ou l'huile diméthyle vinylée V 3500 ou l'huile diméthyle hydroxylée V 750 conservent leurs caractéristiques de départ; il en est de même pour les huiles réagissant avec ces résines

– le rapport molaire SiH/SiOH (dénommé H/OH) basé sur les réactifs de départ, c'est-à-dire le polymère méthylhydrogénopolysiloxanique et les polymères organopolysiloxaniques hydroxylés

– la résistance à la flamme des mousses.

Pour déterminer cette résistance, on fabrique tout d'abord, par moulage un cylindre de mousse de 100 mm de hauteur et de 70 mm de diamètre, après vieillissement une semaine à l'air ambiant, la mousse est placée verticalement au-dessus de la flamme d'un bec-à-gaz Meker.

La base du cylindre de mousse est à 1 cm au-dessus du cône de la flamme porté à 1000 °C. On maintient le cylindre dans ces conditions pendant 3 heures. On examine ensuite l'état de la mousse et détermine, lorsqu'elle existe, la fraction de la mousse encore intacte; on note également l'état de la partie brûlée, en particulier le comportement des cendres: friables, peu friables.

Tous ces résultats ainsi que les compositions $A_1$ et $B_1$ des différentes formules de mousses sont rassemblées dans le tableau ci-après. Les 6 exemples rentrant dans le cadre de l'invention sont dénommés. E.1, E.2, E.3, E.4, E.5 et E.6 les 4 exemples comparatifs en dehors du cadre de l'invention sont dénommés $C_1$, $C_2$, $C_3$ et $C_4$.

Tabelle

| | E.1 | | E.2 | | E.3 | | E.4 | | E.5 | | E.6 | | $C_1$ | | $C_2$ | | $C_3$ | | $C_4$ | |
|---|---|---|---|---|---|---|---|---|---|---|---|---|---|---|---|---|---|---|---|---|
| | $A_1$ | $B_1$ | $A_1$ | $B_1$ | $A_1$ | $B_1$ | $A_1$ | $B_1$ | $A_1$ | $B_1$ | $A_1$ | $B_1$ | $A_1$ | $B_1$ | $A_1$ | $B_1$ | $A_1$ | $B_1$ | $A_1$ | $B_1$ |
| Huile diméthyle vinylée V 100000 | 100 | | 100 | | | | 100 | | | | 100 | | | | | | | 100 | 100 | |
| Huile diméthyle vinylée V 3500 | | 390 | | 400 | | 500 | | 400 | | 500 | | 390 | | 500 | 490 | 690 | | 265 | | 390 |
| Huile diméthyle V 1000 | | | 60 | 300 | | | 60 | 300 | | | | | | | | | | | 60 | 300 |
| Huile diméthyle V 100 | 60 | 300 | | | | | | | 150 | | 84 | 300 | | | | | 60 | 320 | | |
| Huile diméthyle V 50 | | | | | 140 | 230 | | | | 230 | | | 140 | 230 | | | | | | |
| Huile diméthyle hydroxylée V 3500 | | | | | 210 | | | | 450 | | | | 585 | | | | | | | |
| Huile diméthyle hydroxylée V 750 | 275 | | 200 | | | | 275 | | | | 275 | | | | | | 350 | | 500 | |
| Huile diméthyle hydroxylée V 60 | | | | | 100 | | | | | | | | 100 | | 100 | | | | | |
| Huile diméthyle hydroxylée V 35 | 23 | | 20 | | | | 23 | | 40 | | | | | | | | 40 | | 25 | |
| Résine liquide formée à partir de résine MQ à 3,4% d'OH et d'huile diméthyle V 20 | | | | | | | | | | | | | | | 250 | | | | | |
| Résine liquide formée à partir de résine MQ à 3,4% d'OH et d'huile diméthylevinylée V3500 | | | | | | | | | | | | | | | | | 375 | | | |
| Résine liquide formée à partir de résine MQ à 3,4% d'OH et d'huile diméthyle hydroxylée V 750 | 375 | | 500 | | 375 | | | | | | 375 | | | | | | | | | |
| Résine liquide formée à partir de résine MQ à 1,3% d'OH et d'huile diméthyle hydroxylée V 750 | | | | | | | 375 | | | | | | | | | | | | | |
| Résine liquide à 2,5% d'OH et de $CH_3/Si$ 1,3 | | | | | | | | | 200 | | | | | | | | | | | |
| Polymère méthylhydrogénopolysiloxanique | | 160 | | 160 | | 130 | | 160 | | | | 160 | | 130 | | 160 | | 160 | | 160 |
| Quartz broyé | 150 | 150 | 150 | 150 | 150 | 150 | 150 | 150 | 150 | 150 | 150 | 150 | 150 | 150 | 150 | 150 | 150 | 150 | 150 | 150 |
| Empâtage noir de carbone | 11 | | 11 | | 11 | | 11 | | | | 11 | | 11 | | 11 | | 11 | | 11 | |
| solution catalytique à 0,25% de Pt | 11 | | 11 | | 11 | | 11 | | 11 | | 11 | | 11 | | 11 | | 11 | | 11 | |
| méthylvinylcyclopolysiloxane | | | 0,5 | | | | | | | | 0,5 | | | | 0,3 | | | | | |
| Viscosité mPa.s à 25 °C | 2400 | 600 | 6800 | 1400 | 2500 | 900 | 3000 | 1400 | 10000 | 3360 | 3000 | 600 | 1800 | 900 | 2200 | 2000 | 3500 | 1200 | 3000 | 1400 |
| Temps de prise en s | 90 | | 70 | | 90 | | 90 | | 190 | | 100 | | 90 | | 110 | | 120 | | 70 | |
| Masse spécifique en $kg/m^3$ | 270 | | 250 | | 250 | | 270 | | 270 | | 330 | | 240 | | 310 | | 320 | | 280 | |
| OH/mole | 4 | | 8,5 | | 2,9 | | 2,8 | | 2,9 | | 5,6 | | 2 | | 2,7 | | | | 2 | |
| H/mole | 4,6 | | 2 | | 3,2 | | 6,7 | | | | 6,2 | | 7,1 | | 5,2 | | | | 11,9 | |
| Résistance à la flamme | 30%* | | 30%* | | 30%* | | 30%* | | 35%* | | 28%* | | 25%* | | ** | | 10%* | | 15%* | |

* pourcentage correspondant à la partie non brûlée (de la mousse) cendres peu friables

** Mousse entièrement brûlée; cendres friables

On note d'après les résultats consignés dans le tableau que les mousses des exemples E.1 à E.5 résistent remarquablement bien à la combustion.

La mousse de l'exemple E6 a une résistance un peu plus faible, cette mousse est issue d'une composition identique à celle de l'exemple E.1 excepté

que l'huile diméthyle hydroxylée V 35 n'est pas employée; l'absence de cette huile de basse viscosité perturbe quelque peu la cellularisation. La mousse a une structure plus grossière et une densité plus élevée.

Comme déjà indiqué, les exemples $C_1$ à $C_4$ sont donnés à titre comparatif.

La composition utilisée dans l'exemple $C_1$ se différencie de celle des exemples E.1 à E.6 par l'absence de résine liquide; elle renferme cependant une huile diméthyle V 50 et une huile diméthyle hydroxylée V 60; elle présente du fait qu'elle ne renferme que des polymères organopolysiloxaniques hydroxylés de structure linéaire un nombre d'OH par mole de 2.

Elle conduit à une mousse dont la résistance à la flamme est inférieure à celle des mousses des exemples E.1 à E.6. Cette moins bonne résistance, qui ressort du commentaire formulé dans le tableau, est mise en évidence d'une façon encore plus nette par le test ci-après qui reproduit pratiquement les conditions de dégradation auxquelles sont soumis les éléments coupe-feu dans les applications industrielles, au cours d'un incendie.

On place dans une trémie, constituée d'un cadre parallèlépipèdique en acier soudé, de dimensions 400×400×250 mm un bloc de mousse sensiblement de mêmes dimensions; ce bloc est issu de la composition moussante de l'exemple E.1.

On place la trémie horizontalement sur un four à la place du couvercle de celui-ci; dans cette position le brûleur du four est perpendiculaire aux 2 grandes faces parallèles du bloc de mousse, et son cône de flamme, porté à 1100 °C, est à 1 cm de la grande face regardant le four.

La mousse de l'exemple E.1 supporte le test de chauffage pendant 180 mn. Au bout de cette durée, la mousse est carbonisée sur une épaisseur de 180 mm environ, le reste de la mousse a conservé sa souplesse et ses qualités initiales.

On reproduit cet essai en remplaçant la mousse de l'exemple E.1 par celle de l'exemple comparatif $C_1$. Au bout de 150 minutes de chauffage, la mousse est carbonisée sur toute son épaisseur; ainsi elle ne satisfait pas à l'obligation de résister à la flamme pendant 3 heures.

– La composition préparée à l'exemple comparatif $C_2$ conduit à une mousse résistant fort mal à la combustion. Cela est dû à 2 facteurs:

(1) l'emploi d'une résine liquide préparée par chauffage d'une résine MQ à 3,4% d'OH avec une huile diméthyle V 20; cette huile est peu ou non réactive vis-à-vis de la résine MQ

(2) l'absence d'une quantité appropriée d'huile diméthyle du type V 1000, V 100 ou V 50, la quantité d'huile diméthyle V 20 apportée par l'emploi de la résine liquide étant nettement en-dessous de la limite inférieure exigée.

– La composition préparée à l'exemple comparatif $C_3$ conduit à une mousse de meilleure qualité que celle issue de la composition préparée à l'exemple $C_2$. Toutefois, cette mousse possède une résistance encore faible à la combustion; la cause principale de ce défaut est l'utilisation d'une résine liquide préparée par chauffage d'une résine MQ à 3,4% d'OH avec une huile diméthyle vinylée V 3500 (cette huile peut être considérée comme peu réactive vis-à-vis de la résine MQ).

– La composition préparée à l'exemple comparatif $C_4$ renferme sensiblement les constituants de la composition de l'exemple E.2; elle ne contient pas cependant la résine liquide formée à partir de la résine MQ à 3,4% d'OH et de l'huile diméthyle hydroxylée V 750; la mousse issue de cette composition présente une résistance à peine moyenne à la combustion.

En ce qui concerne la valeur des masses spécifiques des mousses issues des compositions des exemples E.1 et E.6, et des compositions des exemples comparatifs $C_1$ à $C_4$, on constate que la présence ou l'absence de résine liquides dans ces compositions n'a pas de répercussion notable sur cette valeur; ainsi les compositions des exemples $C_12$ et $C_4$, sans résine liquide, conduisent à des mousses ayant une masse volumique en kg/m$^3$ de respectivement 240 et 280 valeurs proches de celles des mousses issues des compositions des exemples E.1 à E.5.

## Revendications

1. Compositions organopolysiloxaniques transformables en mousses résistant à la flamme, caractérisées en ce qu'elles comportent:

A) 100 parties d'une huile diorganopolysiloxanique, bloquée à chaque extrémité de sa chaîne par un motif vinyldiorganosiloxy, dont les radicaux organiques liés aux atomes de silicium sont choisis parmi les radicaux méthyle, éthyle, n-propyle, vinyle, phényle, trifluoro-3,3,3 propyle, de viscosité 100 à 250 000 mPa.s à 25 °C.

B) 50 à 100 parties d'une huile diorganopolysiloxanique bloquée à chaque extrémité de sa chaîne par un motif triorganosiloxy dont les radicaux organiques liés aux atomes de silicium, sont choisis parmi les radicaux méthyle, éthyle, phényle, trifluoro-3,3,3 propyle, de viscosité 10 à 5000 mPa.s à 25 °C.

C) 25 à 180 parties d'une huile diorganopolysiloxanique bloquée à chaque extrémité de sa chaîne par un radical hydroxyle, dont les radicaux organiques liés aux atomes de silicium sont choisis parmi les radicaux méthyle, éthyle, phényle, trifluoro-3,3,3 propyle, de viscosité 5 à 10 000 mPa.s à 25 °C.

D) 10 à 150 parties d'une résine liquide choisie dans le groupe constitué:

(i) d'une résine possèdant des motifs de formules $CH_3SiO_{1,5}$ et $(CH_3)_2SiO$, de rapport $CH_3/Si$ 1,1 à 1,6, ayant une teneur pondérale de 1 à 6% en radicaux hydroxyles liés aux atomes de silicium, de viscosité 1500 à 20 000 mPa.s à 25 °C.

(2i) d'un produit de réaction préparé

– à partir d'une solution, dans un solvant organique, d'une résine silicone possèdant des motifs de formule $(CH_3)_3SiO_{0,5}$ et $SiO_2$ dont le rapport molaire $(CH_3)_3SiO_{0,5}/SiO_2$ est 0,4 à 1,2, ayant 0,6 à 5,5 moles-% de radidaux hydroxyles liés aux atomes de silicium et d'une huile diorganopolysiloxanique bloqués à chaque extrémité de sa chaîne par un radical hydroxyle liés à l'atome de silicium terminal, dont les radicaux organiques liés aux atomes de silicium sont choisis parmi les radicaux méthyle, éthyle, phényle, trifluoro-3,3,3 propyle, de viscosité 10 à 4000 mPa.s à 25 °C

– par chauffage du mélange des 2 réactifs, le rapport pondéral résine silicone/huile diorganopolysiloxanique étant 0,1 à 1,0 à une température supérieure à 80 °C pendant le temps nécessaire pour éliminer le solvant organique

(3i) du mélange de la résine (i) avec le produit de la réaction

(2i) le rapport pondéral résine (i)/produit de réaction (2i) étant 0,2 à 5

E) 10 à 40 parties d'un polymère liquide organohydrogénopolysiloxanique ayant au moins 3 SiH par mole

F) 30 à 90 parties d'une charge minérale et/ou métallique

G) 0,001 à 0,05 partie de platine-métal sous la forme d'un dérivé organique et/ou minérale du platine

2. Compositions selon la revendication 1, caractérisées en ce que le mélange des huiles C) et des résines D) présentent plus de 2,5 radicaux hydroxyles par mole.

3. Compositions selon la revendication 1 ou 2, caractérisées en ce que le rapport molaire des radicaux SiH apportés par le polymère E) aux radicaux hydroxyles aportés par les huiles C) et les résines D) est de 1,2 à 25.

4. Compositions selon l'une quelconque des revendications précédentes, caractérisées en ce que l'huile B est formée d'un mélange d'une huile de viscosité 15 à 100 mPa.s à 25 °C et d'une huile de viscosité 100 à 2500 mPa.s à 25 °C.

5. Compositions selon l'une quelconque des revendications précédentes, caractérisées en ce que l'huile C) est formée d'un mélange d'une huile de viscosité 5 à 150 mPa.s à 25 °C et d'une huile de viscosité 300 à 8000 mPa.s à 25 °C.

6. Compositions selon l'une quelconque des revendications caractérisés en ce que les résines (i) présentent au moins 2,9 radicaux hydroxydes par mole.

7. Compositions selon l'une quelconque des revendications précédentes, caractérisées en ce que le produit de réaction 2i est préparé à partir d'une résine MQ ayant un rapport molaire $(CH_3)_3SiO_{0,5}/SiO_2$ de 0,5 à 1,1 et ayant une teneur pondérale en radicaux hydroxyle de 0,8 à 5,0%.

8. Compositions selon la revendication 7, caractérisées en ce que la résine MQ présente au moins 2,8 radicaux hydroxyles par mole.

9. Compositions monocomposantes selon l'une quelconque des revendications précédentes, caractérisées en ce qu'elles comportent en outre de 0,00 5 à 5 parties d'un inhibiteur au catalyseur au platine G) pour 100 parties de d'huile vinylée A).

10. Compositions selon l'une quelconque des revendications 1 à 8, caractérisées en ce qu'elles sont présentées avant emploi en deux composantes.

11. Procédé de préparation de compositions organopolysiloxaniques transformables en mousses résistant à la flamme, caractérisées en ce qu'elles sont préparées par mélange de:

A) 100 parties d'une huile diorganopolysiloxanique, bloquée à chaque extrémité de sa chaîne par un motif vinyldiorganosiloxy, dont les radicaux organiques liés aux atomes de silicium sont choisis parmi les radicaux méthyle, éthyle, n-propyle, vinyle, phényle, trifluoro-3,3,3 propyle, de viscosité 100 à 250 000 mPa.s à 25 °C.

B) 50 à 100 parties d'une huile diorganopolysiloxanique bloquée à chaque extrémité de sa chaîne par un motif triorganosiloxy dont les radicaux organiques liés aux atomes de silicium, sont choisis parmi les radicaux méthyle, éthyle, phényle, trifluoro-3,3,3 propyle, de viscosité 10 à 5000 mPa.s à 25 °C.

C) 25 à 180 parties d'une huile diorganopolysiloxanique bloquée à chaque extrémité de sa chaîne par un radical hydroxyle, dont les radicaux organiques liés aux atomes de silicium sont choisis parmi les radicaux méthyle, éthyle, phényle, trifluoro-3,3,3 propyle, de viscosité 5 à 10 000 mPa.s à 25 °C.

D) 10 à 150 parties d'une résine liquide choisie dans le groupe constitué:

(i) d'une résine possèdant des motifs de formules $CH_3SiO_{1,5}$ et $(CH_3)_2SiO$, de rapport $CH_3/Si$ 1,1 à 1,6, ayant une teneur pondérale de 1 à 6% en radicaux hydroxyles liés aux atomes de silicium, de viscosité 1500 à 20 000 mPa.s à 25 °C.

(2i) d'un produit de réaction préparé

– à partir d'une solution, dans un solvant organique, d'une résine silicone possèdant des motifs de formule $(CH_3)_3SiO_{0,5}$ et $SiO_2$ dont le rapport molaire $(CH_3)_3SiO_{0,5}/SiO_2$ est 0,4 à 1,2 ayant 0,6 à 5,5 moles-% de radicaux hydroxyles lié aux atomes de silicium et d'une huile diorganopolysiloxanique bloquée à chaque extrémité de sa chaîne par un radical hydroxyle lié à l'atome de silicium terminal, dont les radicaux organiques liés aux atomes de silicium sont choisis parmi les radicaux méthyle, éthyle, phényle, trifluoro-3,3,3 propyle, de viscosité 10 à 4000 mPa.s à 25 °C

– par chauffage du mélange des 2 réactifs, le rapport pondéral résine silicone/huile diorganopolysiloxanique étant 0,1 à 1,0 à une température supérieure à 80 °C pendant le temps nécessaire pour éliminer le solvant organique

(3i) du mélange de la résine (i) avec le produit de la réaction

(2i) le rapport pondéral résine (i)/produit de réaction (2i) étant 0,2 à 5

E) 10 à 40 parties d'un polymère liquide organohydrogénopolysiloxanique ayant au moins 3 SiH par mole

F) 30 à 90 parties d'une charge minérale et/ou métallique

G) 0,001 à 0,05 partie de platine-métal sous la forme d'un dérivé organique et/ou minéral du platine.

## Patentansprüche

1. Schäumbare flammbeständige Organopolysiloxanzusammensetzungen, dadurch gekennzeichnet, dass sie enthalten:

A) 100 Teile eines Diorganopolysiloxanöls, das an jedem Ende seiner Kette durch eine Vinyldiorganosiloxygruppierung blockiert ist, dessen organische, an die Siliciumatome gebundenen Reste ausgewählt sind unter den Methyl-, Ethyl-, n-Propyl-, Vinyl-, Phenyl-, 3,3,3-Trifluorpropylresten, mit der Viskosität 100 bis 250 000 mPa·s bei 25 °C,

B) 50 bis 100 Teile eines Diorganopolysiloxanöls, das an jedem Ende seiner Kette durch eine Triorganosiloxygruppe blockiert ist, dessen organische, an die Siliciumatome gebundenen Reste ausgewählt sind unter den Methyl-, Ethyl-, Phenyl-, 3,3,3-Trifluorpropylresten, mit der Viskosität 10 bis 5000 mPa·s bei 25 °C,

C) 25 bis 180 Teile eines Diorganopolysiloxanöls, das an jedem Ende seiner Kette durch einen Hydroxylrest blockiert ist, dessen organische, an die Siliciumatome gebundenen Reste ausgewählt sind unter den Methyl-, Ethyl-, Phenyl-, 3,3,3-Trifluoropropylresten, mit der Viskosität 5 bis 10 000 mPa·s bei 25 °C,

D) 10 bis 150 Teile eines flüssigen Harzes, ausgewählt in der Gruppe bestehend aus:

(i) Einem Harz mit Gruppierungen der Formeln $CH_3SiO_{1,5}$ und $(CH_3)_2SiO$ mit einem Verhältnis $CH_3/Si$ von 1,1 bis 1,6, mit einem Gewichtsgehalt von 1 bis 6% Hydroxylresten, gebunden an die Siliciumatome, mit einer Viskosität von 1500 bis 20 000 mPa·s bei 25 °C,

(2i) einem Reaktionsprodukt, hergestellt

– ausgehend von einer Lösung in einem organischen Lösungsmittel eines Silikonharzes mit Gruppierungen der Formel $(CH_3)_3SiO_{0,5}$ und $SiO_2$, deren Molverhältnis $(CH_3)_3SiO_{0,5}/SiO_2$ 0,4 bis 1,2 ist, mit 0,6 bis 5,5 Mol-% Hydroxylresten, gebunden an die Siliciumatome und eines Diorganopolysiloxanöls, das an jedem Ende seiner Kette durch einen Hydroxylrest blockiert ist, der an das endständige Siliciumatom gebunden ist, dessen organische, an die Siliciumatome gebundenen Reste ausgewählt sind unter den Methyl-, Ethyl-, Phenyl-, 3,3,3-Trifluorpropylresten, mit der Viskosität 10 bis 4000 mPa·s bei 25 °C,

– durch Erhitzen des Gemisches der beiden Reaktanten, wobei das Gewichtsverhältnis Silikonharz/Diorganopolysiloxanöl 0,1 bis 1,0 ist, auf eine Temperatur höher als 80 °C während einer Zeit, die notwendig ist, um das organische Lösungsmittel zu entfernen,

(3i) dem Gemisch des Harzes (i) mit dem Produkt der Reaktion (2i), wobei das Gewichtsverhältnis Harz (i)/Reaktionsprodukt (2i) 0,2 bis 5 beträgt,

E) 10 bis 40 Teile eines flüssigen Organohydrogenpolysiloxanpolymeren mit wenigstens 3 SiH pro Mol,

F) 30 bis 90 Teile eines mineralischen und/oder metallischen Füllstoffes,

G) 0,001 bis 0,05 Teile Platinmetall in Form eines organischen und/oder anorganischen Derivats des Platins.

2. Zusammensetzungen gemäss Anspruch 1, dadurch gekennzeichnet, dass das Gemisch der Öle C) und der Harze D) mehr als 2,5 Hydroxylreste pro Mol aufweist.

3. Zusammensetzungen gemäss Anspruch 1 oder 2, dadurch gekennzeichnet, dass das Molverhältnis der Reste SiH, die durch das Polymere E) eingebracht werden, zu den Hydroxylresten, die durch die Öle C) und die Harze D) eingebracht werden, 1,2 bis 25 ist.

4. Zusammensetzungen gemäss einem der vorhergehenden Ansprüche, dadurch gekennzeichnet, dass das Öl B) gebildet ist aus einem Gemisch eines Öls der Viskosität 15 bis 100 mPa·s bei 25 °C und eines Öls der Viskosität 100 bis 2500 mPa·s bei 25 °C.

5. Zusammensetzungen gemäss einem der vorhergehenden Ansprüche, dadurch gekennzeichnet, dass das Öl C) gebildet ist aus einem Gemisch eines Öls der Viskosität 5 bis 150 mPa·s bei 25 °C und eines Öls der Viskosität 300 bis 8000 mPa·s bei 25 °C.

6. Zusammensetzungen gemäss einem der vorhergehenden Ansprüche, dadurch gekennzeichnet, dass die Harze (i) mindestens 2,9 Hydroxylreste pro Mol aufweisen.

7. Zusammensetzungen gemäss einem der vorhergehenden Ansprüche, dadurch gekennzeichnet, dass das Reaktionsprodukt (2i) hergestellt ist aus einem Harz MQ mit einem Molverhältnis $(CH_3)(_3SiO_{0,5}/SiO_2$ von 0,5 bis 1,1 und mit einem Gewichtsgehalt an Hydroxylresten von 0,8 bis 5,0%.

8. Zusammensetzungen gemäss Anspruch 7, dadurch gekennzeichnet, dass das Harz MQ mindestens 2,8 Hydroxylreste pro Mol aufweist.

9. Einkomponentenzusammensetzungen gemäss einem der vorhergehenden Ansprüche, dadurch gekennzeichnet, dass sie ausserdem 0,005 bis 5 Teile eines Inhibitors für den Katalysator mit Platin G) für 100 Teile des Vinylöls (A) enthalten.

10. Zusammensetzungen gemäss einem der vorhergehenden Ansprüche 1 bis 8, dadurch gekennzeichnet, dass sie vor Gebrauch als Zweikomponentenzusammensetzungen angeboten werden.

11. Verfahren zur Herstellung der schäumbaren flammbeständigen Organopolysiloxanzusammensetzungen, dadurch gekennzeichnet, dass sie hergestellt werden durch Vermischen von:

A) 100 Teilen eines Diorganopolysiloxanöls, das an jedem Ende seiner Kette durch eine Vinyldiorganosiloxygruppe blockiert ist, dessen organische, an die Siliciumatome gebundenen Reste ausgewählt sind unter den Methyl-, Ethyl-, n-Propyl-, Vinyl-, Phenyl-, 3,3,3-Trifluorpropylresten, mit der Viskosität 100 bis 250 000 mPa·s bei 25 °C,

B) 50 bis 100 Teilen eines Diorganopolysiloxanöls, das an jedem Ende seiner Kette durch eine Triorganosiloxygruppe blockiert ist, dessen organische, an die Siliciumatome gebundenen Reste ausgewählt sind unter den Methyl-, Ethyl-, Phenyl-, 3,3,3-Trifluorpropylresten, mit der Viskosität 10 bis 5000 mPa·s bei 25 °C,

C) 25 bis 180 Teilen eines Diorganopolysiloxanöls, das an jedem Ende seiner Kette durch einen Hydroxylrest blockiert ist, dessen organische, an die Siliciumatome gebundenen Reste ausgewählt sind unter den Methyl-, Ethyl-, Phenyl-, 3,3,3-Trifluorpropylresten, mit der Viskosität 5 bis 10 000 mPa·s bei 25 °C,

D) 10 bis 150 Teilen eines flüssigen Harzes, ausgewählt aus der Gruppe bestehend aus:

(i) Einem Harz mit Gruppierungen der Formeln $CH_3SiO_{1,5}$ und $(CH_3)_2SiO$, mit einem Verhältnis $CH_3/Si$ von 1,1 bis 1,6, mit einem Gewichtsgehalt von 1 bis 6% an Hydroxylresten, die an Siliciumatome gebunden sind, mit der Viskosität 1500 bis 20 000 mPa·s bei 25 °C,

(2i) einem Reaktionsprodukt, hergestellt

– ausgehend von einer Lösung in einem organischen Lösungsmittel eines Silikonharzes mit Gruppierungen der Formel $(CH_3)_3SiO_{0,5}$ und $SiO_2$, dessen Molverhältnis $(CH_3)_3SiO_{0,5}/SiO_2$ 0,4 bis 1,2 ist, mit 0,6 bis 0,5 Mol-% Hydroxylresten, gebunden an die Siliciumatome, und eines Diorganopolysiloxanöls, das an jedem Ende seiner Kette durch einen Hydroxylrest blockiert ist, der an das endständige Siliciumatom gebunden ist, dessen organische, an die Siliciumatome gebundenen Reste ausgewählt sind unter den Methyl-, Ethyl-, Phenyl-, 3,3,3-Trifluorpropylresten, mit der Viskosität 10 bis 4000 mPa·s bei 25 °C,

– durch Erhitzen des Gemisches der zwei Reaktanten, wobei das Gewichtsverhältnis Silikonharz/Diorganopolysiloxanöl 0,1 bis 1,0 beträgt, auf eine Temperatur oberhalb 80 °C während der Zeit, die notwendig ist, um das organische Lösungsmittel zu entfernen,

(3i) dem Gemisch des Harzes (i) mit dem Produkt der Reaktion (2i), wobei das Gewichtsverhältnis Harz (i)/Reaktionsprodukt (2i) 0,2 bis 5 beträgt,

E) 10 bis 40 Teilen eines flüssigen Organohydrogenpolysiloxanpolymeren mit mindestens 3 SiH pro Mol,

F) 30 bis 90 Teilen eines mineralischen und/oder metallischen Füllstoffs,

G) 0,001 bis 0,05 Teilen Platinmetall in Form eines organischen und/oder anorganischen Derivats des Platins.

## Claims

1. Organisiloxane compositions capable of being converted into flame-resistant foams, characterized in that they comprise:

A) 100 parts of a diorganopolysiloxane oil, blocked at each end of its chain by a vinyldiorganosiloxy unit, in which the organic radicals linked to the silicon atoms are chosen from methyl, ethyl, n-propyl, vinyl, phenyl and 3,3,3-trifluoropropyl radicals, with a viscosity of 100 to 250,000 mPa·s at 25 °C,

B) 50 to 100 of a diorganopolysiloxane oil blocked at each end of its chain by a triorganosiloxy unit in which the organic radicals linked to the silicon atoms are chosen from methyl, ethyl, phenyl and 3,3,3-trifluoropropyl radicals, with a viscosity of 10 to 5,000 mPa·s at 25 °C,

C) 25 to 180 parts of a diorganopolysiloxane oil blocked at each end of its chain by a hydroxyl radical, in which the organic radicals linked to the silicon atoms are chosen from methyl, ethyl, phenyl and 3,3,3-trifluoropropyl radicals, with a viscosity of 5 to 10,000 mPa·s at 25 °C,

D) 10 to 150 parts of a liquid resin chosen from the group consisting:

(i) of a resin containing units of formulae $CH_3SiO_{1.5}$ and $(CH_3)_2SiO$, with a $CH_3/Si$ ratio of 1.1 to 1.6, having a weight content of 1 to 6% of hydroxyl radicals linked to the silicon atoms, with a viscosity of 1,500 to 20,000 mPa·s at 25 °C,

(2i) of a reaction product prepared

– from a solution, in an organic solvent, of a silicone resin containing units of formula $(CH_3)_3SiO_{0.5}$ and $SiO_2$ in which the molar ratio $(CH_3)_3SiO_{0.5}/SiO_2$ is 0.4 to 1.2, which has 0.6 to 5.5 mol% of hydroxyl radicals linked to the silicon atoms and from a diorganopolysiloxane oil which are blocked at each end of its chain by a hydroxyl radical which are linked to the terminal silicon atom, in which the organic radicals linked to the silicon atoms are chosen from methyl, ethyl, phenyl and 3,3,3-trifluoropropyl radicals, with a viscosity of 10 to 4,000 mPa·s at 25 °C

– by heating a mixture of the 2 reactants, the weight ratio silicone resin/diorganopolysiloxane oil being 0.1 to 1.0 at a temperature above 80 °C for the time required to remove the organic solvent

(3i) of a mixture of the resin (i) with the reaction product

(2i) the weight ratio resin (i)/reaction product (2i) being 0.2 to 5

E) 10 to 40 parts of a liquid organohydropolysiloxane polymer containing at least 3 SiH per mole,

F) 30 to 90 parts of an inorganic and/or metallic filler, and

G) 0.001 to 0.05 part of platinum metal in the form of an organic and/or inorganic platinum derivative.

2. Compositions according to claim 1, characterized in that the mixture of the oils C) and resins D) contain more than 2.5 hydroxyl radicals per mole.

3. Compositions according to claim 1 or 2, characterized in that the molar ratio of the SiH radicals contributed by the polymer E) to the hydroxyl radicals contributed by the oils C) and the resins D) is from 1.2 to 25.

4. Compositions according to any one of the preceding claims, characterized in that the oil B is formed by a mixture of an oil with a viscosity of 15 to 100 mPa·s at 25 °C and an oil with a viscosity of 100 to 2,500 mPa·s at 25 °C.

5. Compositions according to any one of the preceding claims, characterized in that the oil C) is formed by a mixture of an oil with a viscosity of 5 to 150 mPa·s at 25 °C and an oil with a viscosity of 300 to 8,000 mPa·s at 25 °C.

6. Compositions according to any one of the claims, characterized in that the resins (i) contain at least 2.9 hydroxyl radicals per mole.

7. Compositions according to any one of the preceding claims, characterized in that the reaction product 2i is prepared from an MQ resin which has a $(CH_3)_3SiO_{0.5}/SiO_2$ molar ratio of 0.5 to 1.1 and which has a weight content of hydroxyl radicals of 0.8 to 5.0%.

8. Compositions according to claim 7, characterized in that the MQ resin contains at least 2.8 hydroxyl radicals per mole.

9. Single-component compositions according to any one of the preceding claims, characterized in that they additionally contain from 0.005 to 5 parts of an inhibitor of the platinum catalyst G) per 100 parts of the vinylated oil A).

10. Compositions according to any one of claims 1 to 8, characterized in that they are presented as two components before use.

11. Process for preparing organopolysiloxane compositions capable of being converted into flame-resistant foams, characterized in that they are prepared by mixing:

A) 100 parts of a diorganopolysiloxane oil blocked at each end of its chain by a vinyldiorganosiloxy unit, in which the organic radicals linked to the silicon atoms are chosen from methyl, ethyl, n-propyl, vinyl, phenyl and 3,3,3-trifluoropropyl radicals, with a viscosity of 100 to 250,000 mPa·s at 25 °C,

B) 50 to 100 parts of a diorganopolysiloxane oil blocked at each end of its chain by a triorganosiloxy unit in which the organic radicals linked to the silicon atoms are chosen from methyl, ethyl, phenyl and 3,3,3-trifluoropropyl radicals, with a viscosity of 10 to 5,000 mPa·s at 25 °C,

C) 25 to 180 parts of a diorganopolysiloxane oil blocked at each end of its chain by a hydroxyl radical, in which the organic radicals linked to the silicon atoms are chosen from methyl, ethyl, phenyl and 3,3,3-trifluoropropyl radicals, with a viscosity of 5 to 10,000 mPa·s at 25 °C,

D) 10 to 150 parts of a liquid resin chosen from the group consisting:

(i) of a resin containing units of formulae $CH_3SiO_{1.5}$ and $(CH_3)_2SiO$, with a $CH_3/Si$ ratio of 1.1 to 1.6, having a weight content of 1 to 6% of hydroxyl radicals linked to the silicon atoms, with a viscosity of 1,500 to 20,000 mPa·s at 25 °C,

(2i) of a reaction produced prepared

– from a solution, in an organic solvent, of a silicone resin containing units of formula $(CH_3)_3SiO_{0.5}$ and $SiO_2$, in which the molar ratio $(CH_3)_3SiO_{0.5}/SiO_2$ is 0.4 to 1.2 having 0.6 to 5.5 mol% of hydroxyl radicals linked to the silicon atoms and from a diorganopolysiloxane oil blocked at each end of its chain by a hydroxyl radical linked to the terminal silicon atom, in which the organic radicals linked to the silicon atoms are chosen from methyl, ethyl, phenyl and 3,3,3-trifluoropropyl radicals, with a viscosity of 10 to 4,000 mPa·s at 25 °C

– by heating a mixture of the 2 reactants, the weight ratio silicone resin/diorganopolysiloxane oil being 0.1 to 1.0 at a temperature above 80 °C for the time required to remove the organic solvent

(3i) of a mixture of the resin (i) with the reaction product (2i), the weight ratio resin (i)/reaction product (2i) being 0.2 to 5,

E) 10 to 40 parts of a liquid organohydropolysiloxane polymer containing at least 3 SiH per mole,

F) 30 to 90 parts of an inorganic and/or metallic filler, and

G) 0.001 to 0.05 part of platinum metal in the form of an organic and/or inorganic platinum derivative.